# EUROPÄISCHE PATENTANMELDUNG

(11) **EP 3 578 334 A2**
(43) Veröffentlichungstag der Anmeldung: **11.12.2019**
(21) Anmeldenummer: 19177937.0
(22) Anmeldetag: 03.06.2019
(51) Int. Cl.: B29C 48/21, B60H 1/34, B29C 48/12, B29L 31/30, B29C 48/155

(54) **INNENRAUMKOMPONENTE EINES FAHRZEUGS**

(30) Priorität: 05.06.2018 DE 202018103133 U
(71) Anmelder: Illinois Tool Works, Inc., Glenview, Illinois 60025 (US)
(72) Erfinder: FRISCH, Matthias, Glenview, Illinois 60025 (US)
(74) Vertreter: Trinks, Ole

(57) **Zusammenfassung**

Die Erfindung betrifft eine Innenraumkomponente eines Fahrzeugs, umfassend einen Grundkörper (10), an welchem in einem Extrusions- oder Strangpressverfahren hergestelltes Dekorationselement (14) angeordnet ist, das eine andere Oberflächenbeschaffenheit aufweist als der Grundkörper (10).

## Beschreibung

Die Erfindung betrifft eine Innenraumkomponente eines Fahrzeugs, umfassend einen Grundkörper. Solche Innenraumkomponenten werden im Innenraum eines Fahrzeugs, wie eines PKW oder LKW, verbaut. Beispielhaft genannt seien Luftausströmer und ihre Luftleitelemente, wie Luftleitlamellen.

Innenraumkomponenten müssen einerseits im Betrieb nicht unerheblichen Belastungen standhalten. Besonders gilt dies für manuell betätigte oder bewegte Innenraumkomponenten. Andererseits bestehen immer höhere Anforderungen hinsichtlich der Oberflächenqualität und Designvielfalt der Innenraumkomponenten. Bekannt ist es hierzu beispielsweise, die Innenraumkomponenten im Spritzgussverfahren aus einem Hochglanzmaterial herzustellen oder einen Grundkörper einer Innenraumkomponente nachträglich zu verchromen. Eine galvanische Verchromung ist wegen der Verwendung von Chrom VI im Verchromungsprozess allerdings aus gesundheitlichen und Umweltschutzgründen sowie inzwischen auch aufgrund gesetzlicher Vorgaben problematisch. Außerdem ist eine Verchromung mit verhältnismäßig hohen Kosten verbunden. Auch bieten in bekannter Weise aufgebaute Innenraumkomponenten nur eine begrenzte Designfreiheit.

Aus EP 1 655 160 B1 und DE 10 2013 107 173 A1 sind Luftleitlamellen von Luftausströmern bekannt, bei denen mit einem Grundkörper der Luftleitlamelle ein weiteres Element, beispielsweise ein beschichtetes Dekorelement, verbunden wird. Gemäß EP 1 655 160 B1 kann es sich bei dem weiteren Element um ein lackiertes Spritzgussteil handeln. Gemäß DE 10 2013 107 173 A1 kann das Dekorelement verchromt werden. Die Herstellung dieser bekannten Innenraumkomponenten ist aufwendig und weist insbesondere hinsichtlich der Verchromung die oben genannten Nachteile auf.

Weitere Luftleitlamellen sind aus DE 20 2012 102 333 U1 und DE 20 2012 102 840 U1 bekannt. Die aus DE 20 2012 102 840 U1 bekannte Luftleitlamelle ist mit einer Beschichtung aus Polyurethan versehen. Die dadurch erreichte Designfreiheit ist allerdings gering. Die aus DE 20 2012 102 333 U1 bekannte Luftleitlamelle ist als Strangpresshohlprofil aus Metall oder Kunststoff ausgebildet, wobei in Längsrichtung mindestens zwei, durch eine Längsrippe gebildete röhrenförmige Durchgangsöffnungen vorgesehen sind, und wobei in mindestens eine Durchgangsöffnung in mindestens einer Stirnseite der Luftleitlamelle ein Halteansatz aus Metall oder Kunststoff an einem Funktionselement selbsthaltend einführbar ist. Die Herstellung dieser Luftleitlamelle ist aufwendig und sie besitzt eine geringe Designfreiheit.

Ausgehend von dem erläuterten Stand der Technik liegt der Erfindung daher die Aufgabe zugrunde, eine Innenraumkomponente der eingangs genannten Art bereitzustellen, die bei einfacher Herstellung eine möglichst große Designfreiheit bei zuverlässiger Erfüllung der Belastbarkeitsanforderungen ermöglicht.

Die Erfindung löst die Aufgabe durch den Gegenstand des unabhängigen Anspruchs 1. Vorteilhafte Ausgestaltungen finden sich in den abhängigen Ansprüchen, der Beschreibung und den Figuren.

Für eine Innenraumkomponente der eingangs genannten Art löst die Erfindung die Aufgabe dadurch, dass an dem Grundkörper ein in einem Extrusions- oder Strangpressverfahren hergestelltes Dekorationselement angeordnet ist, das eine andere Oberflächenbeschaffenheit aufweist als der Grundkörper.

Sofern in dieser Anmeldung von einem Extrusions- oder Strangpressverfahren gesprochen wird, beinhaltet dies grundsätzlich auch ein Pultrusions- oder Strangziehverfahren. Bei der Innenraumkomponente handelt es sich um die Innenraumkomponente eines Fahrzeugs, wie eines PKW oder LKW. Sie ist vom Fahrzeuginnenraum her zumindest teilweise sichtbar. Die Innenraumkomponente besitzt einen Grundkörper und ein aus dem Fahrzeuginnenraum sichtbares Dekorationselement. Der Grundkörper kann aus einem Kunststoff bestehen. Das Dekorationselement kann ebenfalls aus einem Kunststoff bestehen, hergestellt in einem Extrusionsverfahren. Das Dekorationselement kann zum Beispiel aber auch aus Metall oder zum Beispiel Keramik bestehen, hergestellt durch ein Strangpressverfahren.

Indem erfindungsgemäß ein Grundkörper und ein an diesem angeordnetes Dekorationselement vorgesehen sind, können einerseits die Anforderungen an die Belastbarkeit und andererseits die hohen Anforderungen hinsichtlich optischem und haptischem Eindruck sowie Designfreiheit zuverlässig erfüllt werden. Das Dekorationselement weist eine andere Oberflächenbeschaffenheit auf als der Grundkörper, so dass die Oberfläche des Dekorationselements besonders an die optischen oder haptischen Anforderungen angepasst werden kann. Eine Verchromung ist nicht erforderlich. Damit werden die hiermit verbundenen Nachteile vermieden. Gleichzeitig ist die Herstellung des Dekorationselements in einem Extrusions- oder Strangpressverfahren einfach und kostengünstig. Der Grundkörper kann in geeigneter Weise hergestellt werden, so dass auch hier beispielsweise ein kostengünstiges und einfaches Verfahren gewählt werden kann. Durch unterschiedliche Dekorationselemente kann für einen vorgegebenen Grundkörper eine Vielzahl unterschiedlicher optischer und haptischer Erscheinungsformen realisiert werden. Es ergeben sich vielfältige dekorative und technische Möglichkeiten, aus denen in flexibler Weise ausgewählt werden kann. Beispielsweise ist bei einer Änderung des optischen Erscheinungsbilds des Dekorationselements keine zusätzliche Investition beispielsweise für Herstellwerkzeuge erforderlich. Das Extrusions- bzw. Strangpressverfahren erlaubt gerade bei länglichen Komponenten ohne aufwendige Geometrien eine einfache und kostengünstige Herstellung. Indem das Dekorationselement getrennt von dem Grundkörper hergestellt werden kann, kann dieses gezielt ohne aufwendige Geometrien gestaltet werden. Der Grundkörper kann dagegen, wie bereits erläutert, auf anderem Wege hergestellt sein, so dass hier problemlos auch kompliziertere Geometrien abbildbar sind.

Der Grundkörper und das Dekorationselement können insbesondere aus unterschiedlichen Materialien bestehen. Zum Beispiel kann der Grundkörper aus einem hinsichtlich der zu erwartenden Belastung besonders angepassten Material, wie einem verstärkten Kunststoff, insbesondere einem glasfaserverstärkten Kunststoff, bestehen. Das Dekorationselement kann dagegen aus einem weniger belastbaren Material, zum Beispiel einem nicht-verstärkten Kunststoff bestehen. Lediglich beispielhaft genannt seien PA(6) glasfaserverstärkter Kunststoff für den Grundkörper und PA(6) nicht-verstärkter Kunststoff für das Dekorationselement.

Das Dekorationselement kann eine andere Farbe und/oder einen anderen Glanz und/oder eine andere Rauheit als der Grundkörper besitzen. Das Dekorationselement kann zum Beispiel einen höheren Glanz und/oder eine geringere Rauheit besitzen. Auf diese Weise kann die durch das Dekorationselement gebildete Sichtfläche hochwertiger ausgebildet sein als der Grundkörper.

Nach einer weiteren Ausgestaltung kann die Oberfläche des Dekorationselements zumindest abschnittsweise durch eine nach dem Extrusions- oder Strangpressverfahren aufgebrachte, vorzugsweise durch Kaschieren oder mittels Koextrusion aufgebrachte, Schicht gebildet sein. Bei der Schicht kann es sich zum Beispiel um eine Folie handeln, beispielsweise eine Kunststofffolie. Im Zuge eines Extrusions- oder Strangpressverfahrens kommt es häufig zu Extrusionsriefen und anderen Oberflächenstörungen. Diese können durch diese Ausgestaltung sicher verdeckt werden, so dass sich eine hochwertige Oberfläche des Dekorationselements ergibt. Die Schicht erlaubt eine flexible Farb- und Mustergestaltung. Beispielsweise sind als Schicht Folien in Hochglanz-, Metall- oder Holzoptik denkbar. Ein aufwendiges Lackieren ist nicht erforderlich. Eine Lackierung des Dekorationselementes wäre aber grundsätzlich auch denkbar, insbesondere da eine Lackierung des Dekorationselements auch aufgrund seiner gegebenenfalls einfachen Geometrie besonders einfach wäre. Beispielswiese könnte das aufwändige Abdecken funktionaler Bereiche der Lamelle dadurch entfallen. Mittels verschiedener Verfahren aufgebrachte Schichten z.B. Farbschichten (Druck, z.B. Transferdruck) stellen weitere Dekorationsmöglichkeiten dar.

Nach einer weiteren Ausgestaltung kann das Dekorationselement durch Verrasten an dem Grundkörper gehalten sein. Es ergibt sich hierdurch eine besonders einfache Montage. Hierzu kann das Dekorationselement Rastelemente aufweisen, die mit korrespondierenden Rastelementen des Grundkörpers verrasten. Es ist auch denkbar, dass das Dekorationselement durch Verkleben oder Verschweißen an dem Grundkörper gehalten ist.

Das Dekorationselement kann gemäß einer weiteren Ausgestaltung den Grundkörper insbesondere vollständig über seinen Umfang umschließen. Beispielsweise kann das Dekorationselement ein den Grundkörper beispielsweise vollständig umschließendes Hohlprofil sein. Das Dekorationselement kann bei dieser Ausgestaltung auf den Grundkörper aufgeschoben werden, insbesondere in Längsrichtung. Die gesamte Umfangsfläche der Innenraumkomponente kann durch das Dekorationselement gebildet sein. Nach einer weiteren diesbezüglichen Ausgestaltung kann das Dekorationselement ein elastisches Schalenelement mit einer an gegenüberliegenden Längskanten des Schalenelements ausgebildeten Rastverbindung sein. Das elastische Schalenelement bildet insbesondere ein offenes Hohlprofil, beispielsweise mit C-förmigem Querschnitt, wobei die offenen Längskanten des Hohlprofils durch Schließen der Rastverbindung verschlossen werden können. Das elastische Schalenelement kann dann beispielsweise durch elastisches Aufweiten des zwischen den gegenüberliegenden Längskanten gebildeten Aufnahmebereichs auf den Grundkörper aufgesetzt werden. Durch Verschließen der an den Längskanten ausgebildeten Rastverbindung kann das Dekorationselement dann wiederum den Grundkörper umschließen. Dabei kann wiederum die gesamte Umfangsfläche der Innenraumkomponente durch das Dekorationselement gebildet sein. Alternativ oder zusätzlich zu einer Rastverbindung wäre es auch denkbar, die offenen Längskanten des Schalenelements zu verkleben oder zu verschweißen. Auch wäre es denkbar, dass das Schalenelement mit seiner Rastverbindung an dem Grundkörper verrastet. Die offenen Längskanten des Schalenelements sind im montierten Zustand insbesondere dem Fahrzeuginnenraum abgewandt, so dass sie für Fahrzeuginsassen nicht sichtbar sind. Das Dekorationselement kann an die Form des Grundkörpers angepasst sein. Zum Beispiel kann das Dekorationselement hohlzylindrisch ausgebildet sein. Es kann beispielsweise eine im Wesentlichen ovale Querschnittsform besitzen.

Bei den vorgenannten Ausgestaltungen kann das Dekorationselement insbesondere so an den Grundkörper angebunden sein, dass es gemeinsam mit diesem bewegt bzw. geschwenkt werden kann.

Nach einer weiteren Ausgestaltung kann auch vorgesehen sein, dass das Dekorationselement schwenkbar mit dem Grundkörper verbunden ist, so dass das Dekorationselement bei einer Schwenkbewegung des Grundkörpers nicht mitverschenkt wird. Die schwenkbare Verbindung kann beispielsweise durch eine Rastverbindung realisiert sein. Bei dieser Ausgestaltung ist das Dekorationselement beweglich an dem Grundkörper gehalten. Das Dekorationselement kann dabei derart an der Vorderkante beispielsweise einer Luftleitlamelle verrastet sein, dass das Dekorationselement mit der Luftleitlamelle eine Drehachse hat, die identisch mit der Drehachse der Luftleitlamelle gegenüber dem Gehäuse ist. Damit wird es möglich, das Dekorationselement starr als (Dekor-)Blende, die das Gehäuse abdeckt, zu verbinden. Das Dekorationselement kann beispielsweise ein Mittelsteg einer solchen Blende sein. Das Dekorationselement bildet damit die sichtbare Vorderkante der Luftleitlamelle. Wird die Luftleitlamelle verschwenkt, bleibt die sichtbare Vorderkante am selben Ort. Damit wird eine Stylinganforderung erfüllt, wonach sich das Erscheinungsbild des Ausströmers auch bei verschwenkten Luftleitlamellen nicht ändern soll. Besonders ist dabei, dass die sichtbare Vorderkante der Luftleitlamelle deutlich über die Drehachse hinausragen kann ohne beim Verschwenken ihre Position zu ändern.

Gemäß einer besonders praxisgemäßen Ausgestaltung kann der Grundkörper in einem Spritzgussverfahren hergestellt sein. Mit Spritzgussverfahren lassen sich in einfacher Weise auch komplizierte Geometrien abbilden. Es ist insgesamt erfindungsgemäß somit eine Kombination aus Extrusion (des Dekorationselements), Kaschierung (des Dekorationselements), Spritzguss (des Grundkörpers) und Konfektion (Ablängen des extrudierten bzw. stranggepressten Profils) möglich.

Die Innenraumkomponente und das Dekorationselement können nach einer weiteren Ausgestaltung länglich ausgebildet sein, insbesondere mit einem Verhältnis von Länge zu Dicke von mindestens 3:1, vorzugsweise von mindestens 5:1. Bei einer über die Länge unregelmäßigen Dicke bzw. einem nicht rotationssymmetrischen Querschnitt beziehen sich die Zahlenwerte auf das Verhältnis der Länge zu der größten Dicke. Wie bereits erläutert, ist das Extrusions- bzw. Strangpressverfahren besonders für längliche Gegenstände gut geeignet. Natürlich sind auch andere Verhältnisse der Länge zu Dicke denkbar, beispielsweise wenn es sich bei dem Dekorationselement um ein Dekorationselement eines Schiebeknopfes eines Luftausströmers handelt.

Bei der Innenraumkomponente kann es sich um ein Luftleitelement, insbesondere eine Luftleitlamelle, eines Luftausströmers handeln. Die Erfindung betrifft auch einen Luftausströmer mit mindestens einem erfindungsgemäßen Luftleitelement, insbesondere einer erfindungsgemäßen Luftleitlamelle, als erfindungsgemäße Innenraumkomponente. Der Luftausströmer kann ein Gehäuse aufweisen mit einer Eintrittsöffnung und einer Austrittsöffnung, zwischen denen ein Luftkanal für aus der Fahrzeugumgebung in den Fahrzeuginnenraum zu leitender Frischluft ausgebildet ist. In dem Luftkanal können dann ein oder mehrere erfindungsgemäße Luftleitelemente verstellbar, insbesondere eine oder mehrere erfindungsgemäße Luftleitlamellen verschwenkbar, angeordnet sein. Dadurch kann die Luft in gewünschter Weise in den Fahrzeuginnenraum abgelenkt werden. Bei der vorgenannten Ausgestaltung kann das Dekorationselement eine Blende für die Luftleitlamelle bilden. Insbesondere kann das Dekorationselement eine dem Fahrzeuginnenraum zugewandte Vorderkante der Luftleitlamelle bilden. Das Dekorationselement kann hierzu zum Beispiel einen U-förmigen Querschnitt besitzen. Als Innenraumkomponenten kommen aber auch andere Bauteile infrage, beispielsweise Bedienelemente, wie Bedienknöpfe, eines Luftausströmers, Gehäuseteile von Luftausströmern und angrenzende Teile, beispielsweise Dekorleisten o. ä. Auch Gitter bzw. Grills von Luftausströmern oder dergleichen kommen als erfindungsgemäße Innenraumkomponente infrage.

Die Erfindung löst die Aufgabe auch durch ein Verfahren zum Herstellen einer erfindungsgemäßen Innenraumkomponente, insbesondere einer Innenraumkomponente nach einem der Schutzansprüche, bei dem der Grundkörper hergestellt wird, bei dem in einem Extrusions- oder Strangpressverfahren das Dekorationselement hergestellt wird, und bei dem das Dekorationselement an dem Grundkörper angeordnet wird. Der Grundkörper kann wie erläutert beispielsweise in einem Spritzgussverfahren hergestellt werden. Anschließend kann das im Extrusions- oder Strangpressverfahren hergestellte Dekorationselement an dem Grundkörper angeordnet werden. Die Oberfläche des Dekorationselements kann zumindest abschnittsweise mit einer Schicht, wie einer Folie oder dergleichen, bedeckt sein, insbesondere kaschiert sein, wie ebenfalls erläutert.

Ausführungsbeispiele der Erfindung werden nachfolgend anhand von Figuren näher erläutert. Es zeigen schematisch:
- Figur 1: eine erfindungsgemäße Innenraumkomponente nach einem ersten Ausführungsbeispiel in einer perspektivischen Ansicht,
- Figur 2: ein vergrößertes Detail der in Figur 1 gezeigten Innenraumkomponente,
- Figur 3: die Innenraumkomponente aus Figur 1 in einem Vormontagezustand in einer perspektivischen Ansicht,
- Figur 4: eine erfindungsgemäße Innenraumkomponente nach einem zweiten Ausführungsbeispiel in einer perspektivischen Ansicht,
- Figur 5: ein vergrößertes Detail der in Figur 4 gezeigten Innenraumkomponente,
- Figur 6: die Innenraumkomponente aus Figur 4 in einem Vormontagezustand in einer perspektivischen Ansicht,
- Figur 7: eine erfindungsgemäße Innenraumkomponente nach einem dritten Ausführungsbeispiel in einer perspektivischen Ansicht,
- Figur 8: die Innenraumkomponente aus Figur 7 in einem Vormontagezustand in einer perspektivischen Ansicht,
- Figur 9: eine erfindungsgemäße Innenraumkomponente nach einem dritten Ausführungsbeispiel in einer perspektivischen Ansicht,
- Figur 10: eine Schnittansicht der Innenraumkomponente aus Figur 9 in einer ersten Betriebsstellung,
- Figur 11: die Schnittansicht aus Figur 10 in einer zweiten Betriebsstellung, und
- Figur 12: die Innenraumkomponente aus Figur 9 in einer weiteren perspektivischen Teilansicht.

Soweit nichts anderes angegeben ist, bezeichnen in den Figuren gleiche Bezugszeichen gleiche Gegenstände.

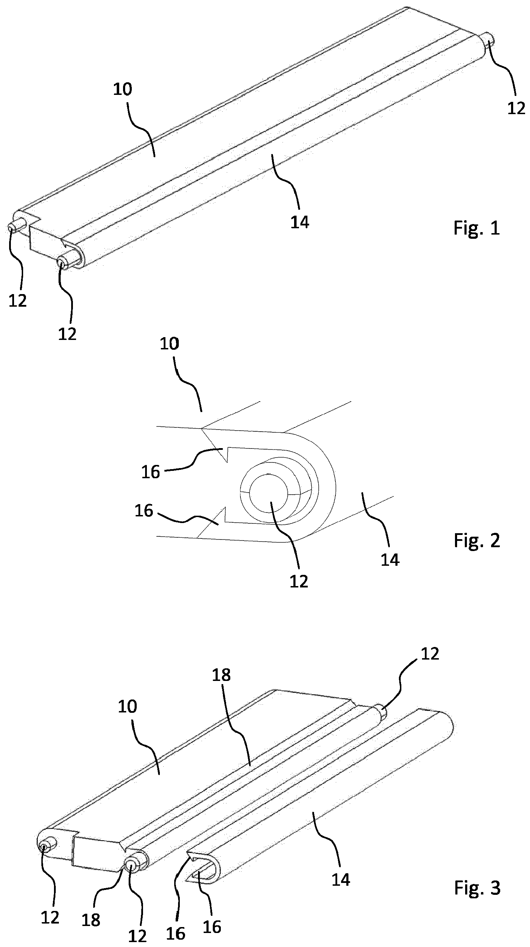

Bei der in Figur 1 gezeigten erfindungsgemäßen Innenraumkomponente handelt es sich um eine Luftleitlamelle eines Luftausströmers für ein Fahrzeug, wie einen PKW oder LKW. Die Luftleitlamelle weist einen Grundkörper 10 auf, an dessen gegenüberliegenden Stirnseiten Lagerzapfen 12 ausgebildet sind, über die die Luftleitlamelle schwenkbar an einem Gehäuse des Luftausströmers gelagert wird. Der Grundkörper 10 besteht aus einem Kunststoff, hergestellt vorliegend in einem Kunststoffspritzgussverfahren. Beispielsweise kann es sich um einen glasfaserverstärkten Kunststoff handeln. Der Grundkörper 10 besitzt eine längliche Form, dessen Verhältnis von Länge zu Dicke mindestens 3:1 beträgt.

An dem Grundkörper 10 angeordnet ist ein in dem dargestellten Beispiel in einem Extrusionsverfahren hergestelltes Dekorationselement 14. Das Dekorationselement 14 weist einen U-förmigen Querschnitt auf und bedeckt im dargestellten Beispiel die im montierten Zustand dem Fahrzeuginnenraum zugewandte Vorderkante des Grundkörpers 10 vollständig. Das Dekorationselement 14 besteht ebenfalls aus einem Kunststoff, vorliegend beispielsweise einem anderen Kunststoff als der Grundkörper 10. Beispielsweise kann das Dekorationselement 14 aus einem nichtverstärkten Kunststoff bestehen. Die Außenseite des U-förmigen Profils des Dekorationselements 14 ist in dem gezeigten Beispiel nach dem Extrusionsverfahren mit einer Folie, vorliegend einer Kunststofffolie, kaschiert worden.

An den freien Enden der Schenkel des U-Profils des Dekorationselements 14 weist dieses nach innen gerichtete, im Querschnitt dreieckige Rastvorsprünge 16 auf. An der Oberseite und der Unterseite des Grundkörpers 10 sind insbesondere in Figur 3 zu erkennende korrespondierende, im Querschnitt dreieckige Rastaufnahmen 18 ausgebildet. Wird das Dekorationselement 14 ausgehend von dem in Figur 3 gezeigten Vormontagezustand auf den Grundkörper 10 aufgeschoben, verrasten die Rastvorsprünge 16 entsprechend in den Rastaufnahmen 18.

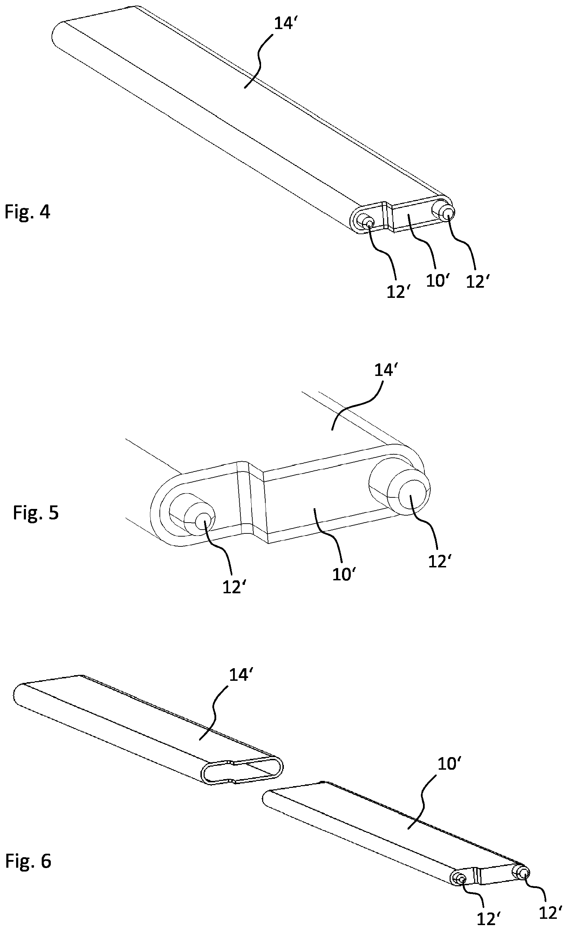

In Figur 4 ist eine erfindungsgemäße Luftleitlamelle nach einem zweiten Ausführungsbeispiel gezeigt. Sie besitzt ebenfalls einen länglichen Grundkörper 10', an dessen Stirnseiten wiederum Lagerzapfen 12' zum schwenkbaren Lagern in einem Gehäuse eines Luftausströmers ausgebildet sind. Der Grundkörper 10' kann zum Beispiel aus demselben Material bestehen wie der Grundkörper 10 der in Figur 1 gezeigten Luftleitlamelle oder aus einem anderen Material.

Bei dem in den Figuren 4 bis 6 gezeigten Ausführungsbeispiel ist das Dekorationselement 14' als ein den Grundkörper 10' umschließendes Hohlprofil ausgebildet. Das Dekorationselement 14' besitzt einen ovalen Querschnitt. Es kann wiederum aus demselben Material bestehen wie das Dekorationselement 14 der in Figur 1 gezeigten Luftleitlamelle oder aus einem anderen Material. Auch das Dekorationselement 14' der in Figur 4 gezeigten Luftleitlamelle ist in einem Extrusionsverfahren hergestellt worden. Wiederum kann das Dekorationselement 14' mit einer nach dem Extrusionsverfahren aufgebrachten Schicht, insbesondere einer durch Kaschieren aufgebrachten Folie, beispielsweise einer Kunststofffolie, versehen sein. Die Schicht bzw. die Folie kann beispielsweise die gesamte Umfangsfläche des Dekorationselements 14' bedecken. Zur Montage wird das an die Form des Grundkörpers 10' angepasste Dekorationselement 14' ausgehend von dem in Figur 6 gezeigten Vormontagezustand in Längsrichtung auf den Grundkörper 10' aufgeschoben. Es kann auf dem Grundkörper 10' beispielsweise durch einen leichten Presssitz gehalten sein.

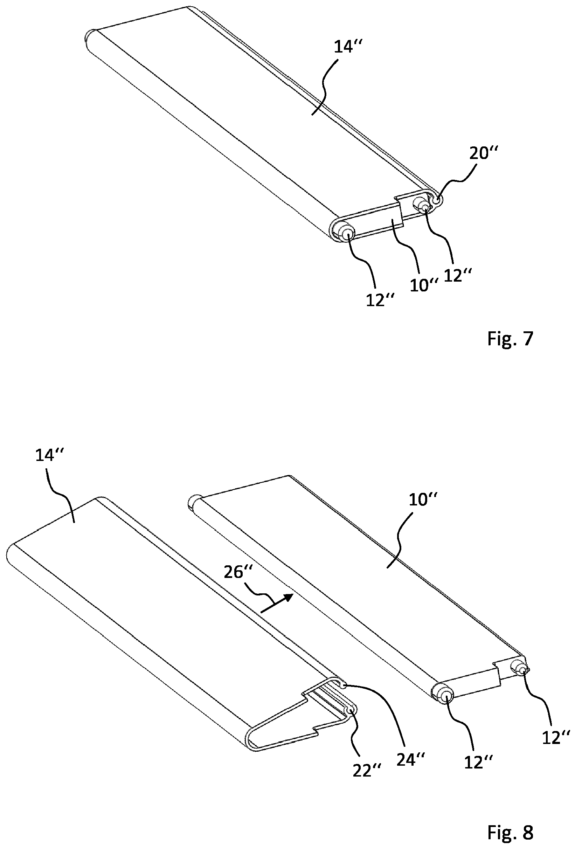

In den Figuren 7 und 8 ist eine erfindungsgemäße Luftleitlamelle nach einem dritten Ausführungsbeispiel gezeigt. Sie besitzt ebenfalls einen länglichen Grundkörper 10", an dessen Stirnseiten wiederum Lagerzapfen 12" zum schwenkbaren Lagern in einem Gehäuse eines Luftausströmers ausgebildet sind. Der Grundkörper 10" kann zum Beispiel aus demselben Material bestehen wie der Grundkörper 10 der in Figur 1 gezeigten Luftleitlamelle oder aus einem anderen Material.

Bei dem in den Figuren 7 und 8 gezeigten Ausführungsbeispiel ist das Dekorationselement 14" als ein elastisches Schalenelement ausgebildet. Das elastische Schalenelement bildet ein offenes Hohlprofil. Es besitzt an eine Aufnahme begrenzenden gegenüberliegenden Längskanten eine Rastverbindung 20". Wie insbesondere in Figur 8 zu erkennen, weist hierzu eine der Längskanten eine im Querschnitt C-förmige Rastaufnahme 22" und die gegenüberliegende Längskante einen korrespondierenden Rastvorsprung 24" auf. Zur Montage kann das Dekorationselement 14" auf den Grundkörper 10" aufgesetzt werden, wie in Figur 8 durch den Pfeil 26" veranschaulicht. Anschließend kann die durch den Rastvorsprung 24" und die Rastaufnahme 22" gebildete Rastverbindung 20' 'geschlossen werden, sodass das Dekorationselement 14" den Grundkörper 10" umschließt.

Das Dekorationselement 14" kann wiederum aus demselben Material bestehen wie das Dekorationselement 14 der in Figur 1 gezeigten Luftleitlamelle oder aus einem anderen Material. Auch das Dekorationselement 14" der in Figur 7 gezeigten Luftleitlamelle ist in einem Extrusionsverfahren hergestellt worden. Wiederum kann das Dekorationselement 14" mit einer nach dem Extrusionsverfahren aufgebrachten Schicht, insbesondere einer durch Kaschieren aufgebrachten Folie, beispielsweise einer Kunststofffolie, versehen sein. Die Schicht bzw. die Folie kann beispielsweise die gesamte Umfangsfläche des Dekorationselements 14" bedecken. Auch das Dekorationselement 14" aus den Figuren 7 und 8 kann auf dem Grundkörper 10" beispielsweise durch einen leichten Presssitz gehalten sein.

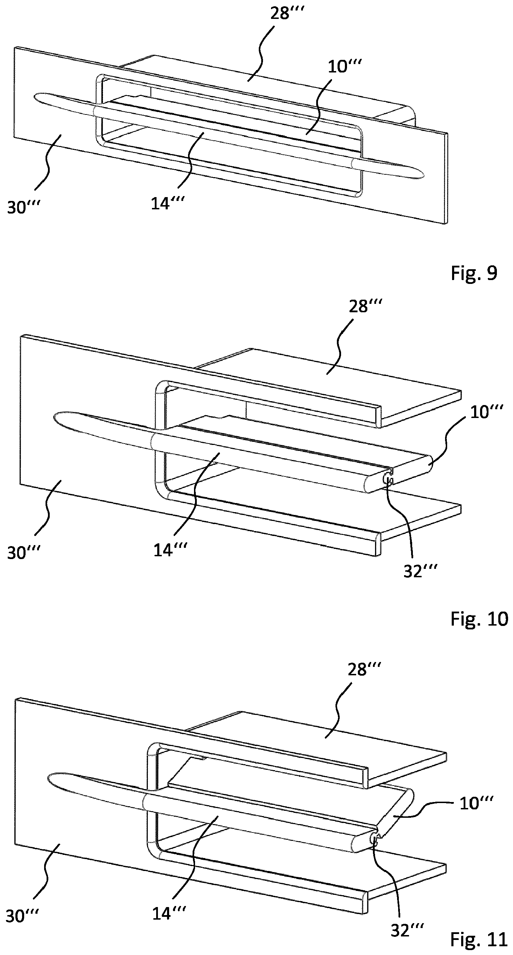

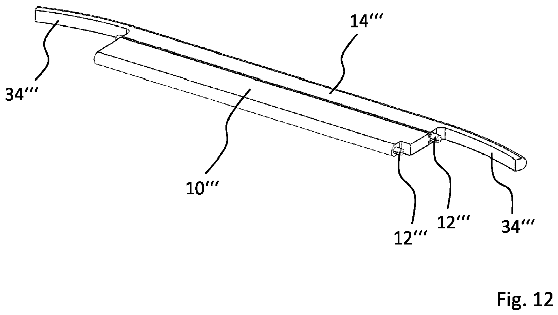

In den Figuren 9 und 12 ist eine erfindungsgemäße Luftleitlamelle nach einem dritten Ausführungsbeispiel gezeigt, teilweise im in ein Gehäuse 28'" eines Luftausströmers eingebauten Zustand. Die in den Figuren 9 bis 12 gezeigte Luftleitlamelle besitzt ebenfalls einen länglichen Grundkörper 10"', an dessen Stirnseiten wiederum Lagerzapfen 12'" zum schwenkbaren Lagern in dem Gehäuse 28'" des Luftausströmers ausgebildet sind. Das Gehäuse besitzt außerdem eine Blende 30"', dessen Mittelsteg vorliegend durch das Dekorationselement 14'" gebildet ist. Das Dekorationselement 14'" kann separat von der Blende 30'" ausgebildet und an dieser montiert sein. Der Grundkörper 10'" kann aus demselben oder einem anderen Material bestehen als der Grundkörper 10 der in Figur 1 gezeigten Luftleitlamelle.

In dem in den Figuren 9 bis 12 gezeigten Ausführungsbeispiel weist der Grundkörper 10'" der Luftleitlamelle einen Rastvorsprung 32'" auf, der in einer korrespondierenden C-förmigen Rastaufnahme des Dekorationselements 14'" aufgenommen ist. Dadurch ist das Dekorationselement 14'" schwenkbar mit dem Grundkörper 10'" verbunden. Es ist also ein Verschwenken des Grundkörpers 10'" möglich, ohne dass das Dekorationselement 14'" mitverschwenkt wird, wie aus einem Vergleich der Figuren 10 und 11 ersichtlich. Das Dekorationselement 14'" verändert seine Position dabei nicht. Der Rastvorsprung 32'" kann koaxial zur Schwenkachse des diesbezüglichen Lagerzapfens 12'" liegen.

In der Teilansicht der Figur 12 ist zu erkennen, dass das Dekorationselement 14'" an seiner Rückseite Beschnitte 34'" aufweist, damit das Dekorationselement 14'" um die Lagerstelle der Luftleitlamelle 10'" herumgeführt und in die Blende eingeführt werden kann. Die Beschnitte 34'" schaffen eine ausreichende Freisparung und elastische Verformbarkeit des Dekorationselements 14"'. Das Dekorationselement 14'" wird so zwischen der Luftleitlamelle 10"', dem Gehäuse 28'" und der Blende 30'" verspannt und gehalten. Zusätzliche Befestigungen des Dekorationselements 14'" und der Blende 30'" sind denkbar, beispielsweise als Heißverstemmung, Verklebung, Verklipsung oder ähnliches.

### Bezugszeichenliste

- 10: Grundkörper
- 10': Grundkörper
- 10": Grundkörper
- 10"': Grundkörper
- 12: Lagerzapfen
- 12': Lagerzapfen
- 12": Lagerzapfen
- 12'": Lagerzapfen
- 14: Dekorationselement
- 14': Dekorationselement
- 14": Dekorationselement
- 14'": Dekorationselement
- 16: Rastvorsprünge
- 18: Rastaufnahmen
- 20": Rastverbindung
- 22": Rastaufnahme
- 24": Rastvorsprung
- 26": Pfeil
- 28"': Gehäuse
- 30"': Blende
- 32'": Rastvorsprung
- 34"': Beschnitt

## Patentansprüche

1. Innenraumkomponente eines Fahrzeugs, umfassend einen Grundkörper (10, 10', 10", 10"'),
**dadurch gekennzeichnet, dass**
an dem Grundkörper (10, 10', 10", 10"') ein in einem Extrusions- oder Strangpressverfahren hergestelltes Dekorationselement (14, 14', 14", 14"') angeordnet ist, das eine andere Oberflächenbeschaffenheit aufweist als der Grundkörper (10, 10', 10", 10'").

2. Innenraumkomponente nach Anspruch 1,
**dadurch gekennzeichnet, dass**
das Dekorationselement (14, 14', 14", 14"') eine andere Farbe und/oder einen anderen Glanz und/oder eine andere Rauheit als der Grundkörper (10, 10', 10", 10"') besitzt.

3. Innenraumkomponente nach einem der vorhergehenden Ansprüche,
**dadurch gekennzeichnet, dass**
die Oberfläche des Dekorationselements (14, 14', 14", 14"') zumindest abschnittsweise durch eine nach dem Extrusions- oder Strangpressverfahren aufgebrachte, vorzugsweise durch Kaschieren oder mittels Koextrusion aufgebrachte, Schicht gebildet ist.

4. Innenraumkomponente nach einem der vorhergehenden Ansprüche,
**dadurch gekennzeichnet, dass**
das Dekorationselement (14, 14', 14", 14"') durch Verrasten an dem Grundkörper (10, 10', 10", 10"') gehalten ist.

5. Innenraumkomponente nach einem der vorhergehenden Ansprüche,
**dadurch gekennzeichnet, dass**
das Dekorationselement (14, 14', 14", 14"') durch Verkleben oder Verschweißen an dem Grundkörper (10, 10', 10", 10"') gehalten ist.

6. Innenraumkomponente nach einem der vorhergehenden Ansprüche,
**dadurch gekennzeichnet, dass**
das Dekorationselement (14, 14', 14", 14"') den Grundkörper umschließt.

7. Innenraumkomponente nach Anspruch 6,
**dadurch gekennzeichnet, dass**
das Dekorationselement (14, 14', 14", 14"') ein den Grundkörper (10, 10', 10", 10"') umschließendes Hohlprofil ist.

8. Innenraumkomponente nach Anspruch 6,
**dadurch gekennzeichnet, dass**
das Dekorationselement (14, 14', 14", 14"') ein elastisches Schalenelement mit einer an gegenüberliegenden Längskanten des Schalenelements ausgebildeten Rastverbindung (20") ist.

9. Innenraumkomponente nach einem der Ansprüche 1 bis 5,
**dadurch gekennzeichnet, dass**
das Dekorationselement (14, 14', 14", 14"') schwenkbar mit dem Grundkörper (10, 10', 10", 10"') verbunden ist, so dass das Dekorationselement (14, 14', 14", 14"') bei einer Schwenkbewegung des Grundkörpers (10, 10', 10", 10"') nicht mitgeschwenkt wird.

10. Innenraumkomponente nach einem der vorhergehenden Ansprüche,
**dadurch gekennzeichnet, dass**
der Grundkörper (10, 10', 10", 10"') in einem Spritzgussverfahren hergestellt ist.

11. Innenraumkomponente nach einem der vorhergehenden Ansprüche,
**dadurch gekennzeichnet, dass**
die Innenraumkomponente und das Dekorationselement (14, 14', 14", 14"') länglich ausgebildet sind, insbesondere ein Verhältnis von Länge zu Dicke von mindestens 3:1, vorzugsweise von mindestens 5:1, besitzen.

12. Innenraumkomponente nach einem der vorhergehenden Ansprüche,
**dadurch gekennzeichnet, dass**
es sich bei der Innenraumkomponente um ein Luftleitelement, insbesondere eine Luftleitlamelle, eines Luftausströmers handelt.

13. Innenraumkomponente nach einem der vorhergehenden Ansprüche,
**dadurch gekennzeichnet, dass**
es sich bei der Innenraumkomponente um einen Schiebeknopf oder eine Blende handelt.
